# EUROPÄISCHE PATENTSCHRIFT

(11) **EP 1 752 324 B1**
(45) Veröffentlichungstag und Bekanntmachung des Hinweises auf die Patenterteilung: **13.02.2008**
(21) Anmeldenummer: 06118465.1
(22) Anmeldetag: 04.08.2006
(51) Int. Cl.: B60H 1/34

(54) **Luftdüse**
Air nozzle
Buse d'aération

(30) Priorität: 10.08.2005 DE 202005012570 U
(43) Veröffentlichungstag der Anmeldung: 14.02.2007
(73) Patentinhaber: Dr. Schneider Kunststoffwerke GmbH, 96317 Kronach (DE)
(72) Erfinder: Uhlenbusch, Olaf, 96275, Marktzeuln (DE); Trinkwalter, Bernd, 96328, Küps (DE); Grüdl, Alexander, 96358, Teuschnitz (DE)
(74) Vertreter: Kinnstätter, Klaus

(56) Entgegenhaltungen:
- EP-A2- 0 257 500
- EP-A2- 1 291 209
- DE-U1- 20 101 735
- FR-A1- 2 760 694
- US-A- 5 470 276
- US-A1- 2005 042 982

## Beschreibung

Die Erfindung betrifft eine Luftdüse zur Führung eines Luftstroms aus einem Luftzuführschacht oder einer Leitung in Heizungs-, Lüftungs- oder Klimaanlagen, insbesondere in Kraftfahrzeugen, mit den im Oberbegriff des Anspruchs 1 angegebenen Merkmalen.

Aus EP 0 810 112 A2 ist eine Runddüse für Fahrgasträume von Kraftfahrzeugen bekannt, bei der im Düsengehäuse ein Rahmen eingesetzt ist, in dem mehrere Klappen schwenkbar angeordnet sind. Die Klappen werden bei Druckbeaufschlagung geöffnet und geschwenkt, wobei über eine Mitkopplung eine weitere Klappe im Gehäuse ebenfalls schwenkbar ist. Folglich kann ein Luftstrom aus der Düse strömen, sofern die vordere Klappenanordnung geöffnet ist, während der Luftstrom bei geschlossenen Klappen unterbunden wird.

In DE 100 46 721 A1 wird eine Luftdüse für eine Anordnung in der Armaturentafel eines Kraftfahrzeuges beschrieben. Diese Luftdüse weist ein ortsfestes, an einen Lüftungskanal angeschlossenes Lagerelement auf, in dem ein diesem gegenüber dreh- und schwenkbar ausgebildetes kugelabschnittsförmiges Lüftungsteil angeordnet ist. An der Vorderseite der Düse sind neben einer verschließbaren Mittenöffnung mehrere ebenfalls verschließbare Bohrungen als Luftdurchlässe ausgestaltet.

Bei den beiden o.g. Konstruktionen tritt der Luftstrom überwiegend in Längsrichtung der Düse an deren Vorderseite aus und ist folglich direkt auf die Fahrzeuginsassen gerichtet. Dies kann bei zugempfindlichen Personen Erkältungen bewirken, wobei mit einer solchen direkten Anströmung ein angenehmes und zugfreies Klima im Fahrgastraum ohnehin nicht realisierbar ist.

Hingegen kann mit der technischen Lösung gemäß DE 201 01 735 U1 die Richtung des aus einer Düse ausströmenden Luftstroms verändert werden. Diese Konstruktion weist zueinander parallel angeordnete und miteinander verbundene Horizontal- sowie ebenso miteinander verbundene Vertikallamellen auf. An einer Horizontallamelle ist ein als Griff ausgestaltetes Betätigungselement verschiebbar angeordnet, das mit einer Vertikallamelle derart in Wirkverbindung steht, dass alle Vertikallamellen verschwenkt werden können.

In DE 101 44 122 C1 wird eine weitere Luftdüse mit Horizontal- und Vertikallamellen beschrieben. Hierbei ist eine der Horizontallamellen als Steuerlamelle ausgebildet, deren Bewegung über mehrere Bauteile in eine Drehbewegung der Vertikallamellen übertragen wird. Somit wird eine Richtungsänderung des aus der Düse ausströmenden Luftstroms erreicht.

Mit diesen technischen Lösungen gemäß DE 201 01 735 U1 und DE 101 44 122 C1 kann der austretende Luftstrom durch im Neigungswinkel verstellbare Klappen oder Lamellen zwar unterschiedlich abgelenkt werden, eine diffuse Verteilung ohne direkte Ausströmung ist jedoch nicht möglich.

Eine Düsenanordnung, mit der sowohl eine direkte Anströmung als auch ein diffuser Luftaustritt möglich sind, wird in DE 20 2004 004 229 U1 beschrieben. Hierfür weist die Luftdüse zusätzliche Luftleitmittel oder Ausströmöffnungen an der Abdeckung oder am Gehäuse auf, mit denen der Luftstrom radial zur Längsachse des Gehäuses abgelenkt werden kann. Somit wird ein diffuser Luftaustritt richtungsgeprägt oder umlaufend erzielt.

Mit einer Luftdüse gemäß DE 20 2004 016 983 U1 können ebenfalls unterschiedliche Luftströme realisiert werden. Hierbei wird durch Änderung der Position von vorzugsweise horizontal angeordneten Horizontallamellen zur Luftführung alternativ eine direkte Belüftung mit gebündeltem Luftstrahl oder eine diffuse Belüftung mit aufgeweitetem Luftstrahl erreicht. Die Horizontallamellen sind in einer bevorzugten Ausführung durch ein Koppelelement miteinander verbunden, so dass eine zueinander abgestimmte Bewegung dieser einzelnen Horizontallamellen erreicht wird. Dabei werden die Horizontallamellen für die Realisierung einer diffusen Anströmung durch das Koppelelement aufgefächert.

EP 1 541 395 A1 betrifft eine Luftdüse mit mehreren Lamellen, die mit Zapfen jeweils in Führungsschlitzen einer mehrfach verlagerbaren Kulissenplatte eingreifen. Somit kann die relative Ausrichtung der Lamellen durch eine Bewegung der Kulissenplatte verändert werden. Unabhängig hiervon kann die Winkelausrichtung der Lamellen mit einem separaten Schieber synchron verstellt werden.

In DE 88 16 559 U1 wird vorgeschlagen, eine zueinander abgestimmte Bewegung der Lamellen mit einer gemeinsamen Koppelstange auszulösen.

Aus FR 2 760 694 A1 ist eine Luftdüse bekannt, bei der das Koppelelement für die Lamellen plattenförmig ausgestaltet ist. Diese Koppelplatte ist an einer Lamelle abgestützt und kann um eine rechtwinklig zur Längsachse der Luftdüse verlaufende Achse geschwenkt werden.

In US 2005/0042 982 A1 wird eine Luftdüse beschrieben, bei der das Koppelelement für die Lamellen mit einem Bedienrad betätigbar ist. Das Bedienrad weist einen Umfangsabschnitt mit einer zahnradförmigen Kontur auf, die über weitere Bauteile mit Zahnradkonturen mit einer Klappe zur Steuerung des Strömungsquerschnittes innerhalb der Luftdüse in Wirkverbindung steht.

Aufgabe der Erfindung ist es, eine weitere technische Lösung zur Betätigung eines Koppelelementes für die Lamellen einer Luftdüse zu schaffen, die einen stufenlosen und feinfühligen Übergang zwischen einer direkten und einer indirekten Belüftung bewirkt, wobei die Lamellen für eine diffuse Anströmung durch das Koppelelement aufgefächert werden.

Diese Aufgabe wird gelöst durch Ausgestaltung einer Luftdüse gemäß den Merkmalen der Ansprüche 1 und 3. Vorteilhafte Ausgestaltungen sind in den Unteransprüchen beschrieben, deren technische Merkmale im Ausführungsbeispiel näher beschrieben werden.

Bei einer erfindungsgemäß ausgestalteten Luftdüse ist das Koppelelement für die Lamellen derart angeordnet und ausgestaltet, dass zusätzlich zu der eine gleichartige Schwenkbewegung der Lamellen bewirkenden Bewegung eine weitere Bewegung des Koppelelementes realisierbar ist, die eine Lageänderung der Lamellen in eine aufgefächerte Ausrichtung bewirkt. Demzufolge lassen sich die Lamellen mit dem Koppelelement in üblicher Weise nach oben und unten verschwenken. Durch eine Zusatzbewegung dieses Koppelelementes lassen sich jedoch auch diffuse Luftströme erzielen, indem die Lamellen gleichmäßig aufgefächert werden.

Hierfür kann das Koppelelement für die Lamellen verschiedenartig ausgestaltet werden.

In einer ersten Ausführung ist vorgesehen, dass das Koppelelement als eine Koppelstange ausgestaltet ist, die an zwei Vorsprüngen an der Wand des Gehäuses abgestützt und rechtwinklig zur Längsachse der Luftdüse verlagerbar ist. Die Koppelstange führt somit eine Bewegung ähnlich wie ein Vorgelegegetriebe aus. Ein diffuser Luftstrom wird durch seitliches Verschieben der Koppelstange erreicht.

In einer zweiten Ausführung ist vorgesehen, dass das Koppelelement als eine Koppelplatte ausgestaltet ist, die an einer Lamelle abgestützt und um eine rechtwinklig zur Längsachse der Luftdüse verlaufende Achse schwenkbar ist. Die Koppelplatte führt somit eine pendelnde Bewegung aus. Ein diffuser Luftstrom wird durch einen Winkelschwenk der Koppelplatte erreicht.

In einer dritten Ausführung ist vorgesehen, dass das Koppelelement als eine Hubplatte mit mehreren zugeordneten Koppelstangen ausgestaltet ist, wobei die Hubplatte in zwei Ausnehmungen in der Wand des Gehäuses abgestützt und in Richtung der Längsachse der Luftdüse verlagerbar ist. Dabei stehen die Koppelstangen mit den Lamellen in Wirkverbindung. Die Hubplatte und die zugeordneten Koppelstangen führen somit eine Bewegung ähnlich wie ein Kniehebel aus. Bei dieser Ausgestaltung werden zwar mehr Einzelteile als bei den vorherigen Varianten benötigt, dafür fährt die Hubplatte für die einzelnen Koppeln jedoch stets linear definiert in einer Führung nach vorn in Richtung der Luftausströmöffnung. Folglich kann hierbei auf eine zusätzliche schwingende oder schwenkende Bewegung verzichtet werden, so dass eventuelle Probleme durch Verklemmen oder Totpunktlagen ausgeschlossen sind.

Für die Betätigung des Koppelelementes sind ebenfalls verschiedenartige Ausgestaltungen vorgesehen.

Dabei ist es beispielsweise möglich, dass das Koppelelement mit einem Bedienrad betätigbar ist. Das Bedienrad kann einen Umfangsabschnitt mit einer zahnradförmigen Kontur aufweisen, die über weitere Bauteile mit Zahnradkonturen mit einer Klappe zur Steuerung des Strömungsquerschnittes innerhalb der Luftdüse in Wirkverbindung steht. Alternativ kann das Bedienrad über eine Koppelstange mit einer Klappe zur Steuerung des Strömungsquerschnittes innerhalb der Luftdüse in Wirkverbindung stehen. Bei beiden Varianten kann vorgesehen werden, dass die den Strömungsquerschnitt innerhalb der Luftdüse steuernde Klappe bei einer diffusen Stellung der Lamellen in eine Schließstellung verlagerbar ist, d.h., die Betätigung der Schließklappe ist dann an die diffuse Stellung der Lamellen gekoppelt.

Die vorstehend beschriebene Ausgestaltung mit einem Bedienrad ist vorzugsweise für eine seitliche Anordnung desselben neben den Lamellen geeignet. Die zur Betätigung des Koppelementes notwendigen Bauteile können jedoch anstelle einer solchen seitlichen Anordnung auch innerhalb der Ausströmöffnung in einer Luftdüse platziert werden.

Sofern hierbei ebenfalls ein Bedienrad verwendet wird, kann dieses Bedienrad baulich in eine der Lamellen integriert werden. Alternativ kann ein solches Bedienrad auch baulich in einen Bedienknopf integriert werden, der auf einer Lamelle abgestützt ist.

In einer weiteren Ausführung ist vorgesehen, dass das Koppelelement mit einem Bedienknopf betätigbar ist, der auf einer Lamelle abgestützt ist. Der Bedienknopf kann mehrteilig ausgeführt werden, wobei lediglich ein mit dem Koppelelement verbundener Teilabschnitt verlagerbar ausgestaltet ist, während der andere Teilabschnitt lagefixiert angeordnet ist.

Weiterhin kann zur Betätigung des Koppelelementes eine Walze vorgesehen werden, die baulich in eine der Lamellen integriert ist. Alternativ kann eine solche Walze auch baulich in einen Bedienknopf integriert werden, der auf einer Lamelle abgestützt ist.

In einer weiteren Ausführung ist vorgesehen, dass das Koppelelement für die Lamellen mit einem Hebelwerk betätigbar ist. Dieses Hebelwerk ist mit einem Bedienknopf verlagerbar, der auf einer Lamelle abgestützt ist und beispielsweise in seiner seitlichen Maximalstellung mit diesem Hebelwerk in Wirkverbindung steht.

Nachfolgend wird die Erfindung anhand der in den Figuren dargestellten Ausführungsbeispiele ergänzend erläutert. Es zeigen:
- Fig. 1: mehrere Baugruppen einer an sich bekannten Ausführung einer Luftdüse in perspektivischer Ansicht
- Fig. 2: eine Luftdüse gemäß Fig. 1 mit Darstellung der Lamellen in einer ersten Position
- Fig. 3: eine Luftdüse gemäß Fig. 1 mit Darstellung der Lamellen in einer zweiten Position
- Fig. 4: mehrere Baugruppen einer erfindungsgemäßen Ausführung einer Luftdüse in perspektivischer Ansicht
- Fig. 5: eine Luftdüse gemäß Fig. 4 mit Darstellung der Lamellen in einer ersten Position
- Fig. 6: eine Luftdüse gemäß Fig. 4 mit Darstellung der Lamellen in einer zweiten Position
- Fig. 7: mehrere Baugruppen einer weiteren Ausführung einer erfindungsgemäßen Luftdüse in perspektivischer Ansicht
- Fig. 8: eine Luftdüse gemäß Fig. 7 mit Darstellung der Lamellen in einer ersten Position
- Fig. 9: eine Luftdüse gemäß Fig. 7 mit Darstellung der Lamellen in einer zweiten Position
- Fig. 10: mehrere Baugruppen einer weiteren Ausführung einer erfindungsgemäßen Luftdüse in perspektivischer Ansicht
- Fig. 11: eine Luftdüse gemäß Fig. 10 mit Darstellung der Lamellen in einer ersten Position
- Fig. 12: eine Luftdüse gemäß Fig. 10 mit Darstellung der Lamellen in einer zweiten Position
- Fig. 13: eine erste Ausführung, bei der das Betätigungselement für das Koppelelement innerhalb der Ausströmöffnung platziert ist, in perspektivischer Ansicht und mit Darstellung der Lamellen in einer ersten Position
- Fig. 14: eine Ausführung gemäß Fig. 13 mit Darstellung der Lamellen in einer zweiten Position
- Fig. 15: mehrere Baugruppen einer Ausführung gemäß Fig. 13 im Detail
- Fig. 16: eine zweite Ausführung, bei der das Betätigungselement für das Koppelelement innerhalb der Ausströmöffnung platziert ist, in perspektivischer Ansicht und mit Darstellung der Lamellen in einer ersten Position
- Fig. 17: eine Ausführung gemäß Fig. 16 mit Darstellung der Lamellen in einer zweiten Position
- Fig. 18: eine dritte Ausführung, bei der das Betätigungselement für das Koppelelement innerhalb der Ausströmöffnung platziert ist, in perspektivischer Ansicht und mit Darstellung der Lamellen in einer ersten Position
- Fig. 19: eine Ausführung gemäß Fig. 18 mit Darstellung der Lamellen in einer zweiten Position
- Fig. 20: eine vierte Ausführung, bei der das Betätigungselement für das Koppelelement innerhalb der Ausströmöffnung platziert ist, in perspektivischer Ansicht und mit Darstellung der Lamellen in einer ersten Position
- Fig. 21: eine Ausführung gemäß Fig. 20 mit Darstellung der Lamellen in einer zweiten Position

Die in der Zeichnung dargestellte Luftdüse ist zur Führung eines Luftstroms aus einem Luftzuführschacht oder einer Leitung in Heizungs-, Lüftungs- oder Klimaanlagen geeignet. Eine bevorzugte Anwendung sind Kraftfahrzeuge, bei denen das Gehäuse 1 der Luftdüse in einem Wanddurchbruch der in der Zeichnung nicht näher dargestellten Instrumententafel eingesetzt wird. Das Gehäuse 1 weist eine vorderseitige Luftausströmöffnung 2 und einen rückseitigen Anschluss 3 für einen Luftzuführschacht oder eine Luftzuführleitung auf. Im Gehäuse 1 sind mehrere Lamellen 4 abgestützt. Diese Lamellen 4 sind durch ein Koppelelement miteinander verbunden und gleichartig verschwenkbar. Hierbei ist vorgesehen, dass das Koppelelement für die Lamellen 4 derart angeordnet und ausgestaltet ist, dass zusätzlich zu der eine gleichartige Schwenkbewegung der Lamellen 4 bewirkenden Bewegung eine weitere Bewegung des Koppelelementes realisierbar ist, die eine Lageänderung der Lamellen 4 in eine aufgefächerte Ausrichtung bewirkt.

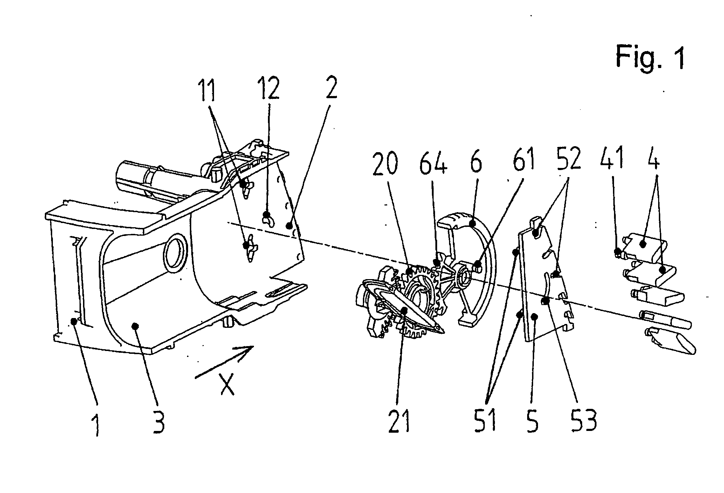

In Fig. 1 bis Fig. 3 ist eine weitgehend als Stand der Technik bekannte Ausführung dargestellt, bei der das Koppelelement für die Lamellen 4 als eine Kulissenplatte 5 ausgestaltet ist. Diese Darstellungen zeigen lediglich das an sich bekannte Grundprinzip eines mehrere Bewegungsrichtungen ausführenden Koppelelementes, wobei an dieser Stelle auf diesbezüglich weitere Erläuterungen verzichtet werden kann.

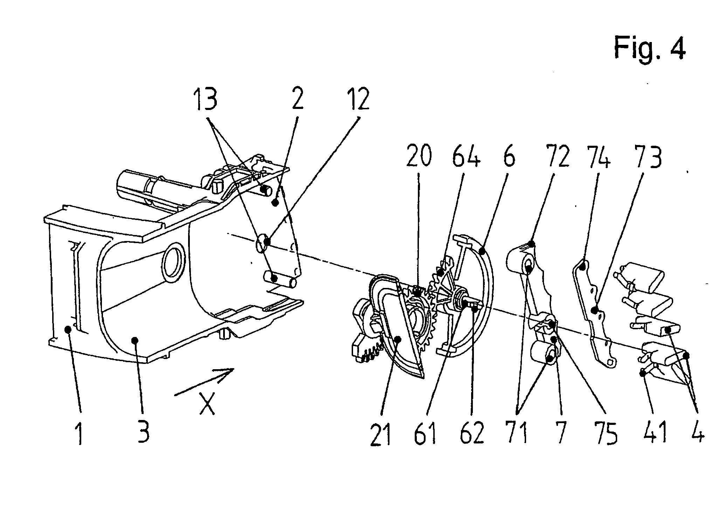

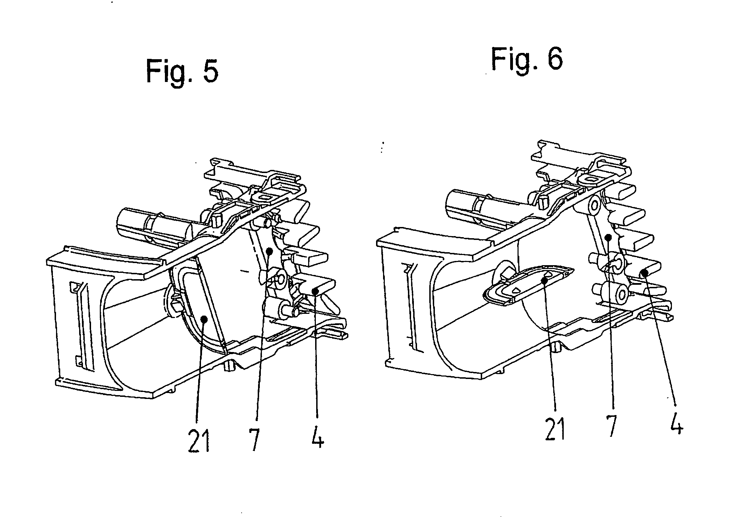

In der Ausführung gemäß Fig. 4 bis Fig. 6 ist das Koppelelement für die Lamellen 4 als eine Koppelstange 7 ausgestaltet. Die Koppelstange 7 weist zwei Ausnehmungen 71 auf, die an Vorsprüngen 13 an der Wand des Gehäuses 1 abgestützt sind. Im gezeigten Ausführungsbeispiel sind die Ausnehmungen 71 als Bohrungen und die Vorsprünge 13 als hierzu kongruente Zapfen ausgestaltet. Somit ist die Koppelstange 7 rechtwinklig zur Längsachse "X" der Luftdüse verlagerbar.

Die Koppelstange 7 kann weitere Ausnehmungen aufweisen, denen jeweils ein zapfenförmiger Vorsprung 41 der Lamellen 4 zugeordnet ist. Alternativ kann die Koppelstange 7 zapfenförmige Vorsprünge aufweisen, denen jeweils eine Ausnehmung der Lamellen 4 zugeordnet ist. Hierbei ist vorgesehen, dass die zapfenförmigen Vorsprünge jeweils gekröpft ausgestaltet sind.

In der Zeichnung ist eine Ausgestaltung dargestellt, bei der die Koppelstange 7 an der zur vorderseitigen Ausströmöffnung 2 der Luftdüse gerichteten Stirnseite eine U-förmige Ausnehmung 72 aufweist. Dieser Ausnehmung 72 ist ein separates flächiges Bauteil 73 zur Wirkverbindung mit den Lamellen 4 zugeordnet. Hierfür weist das separate flächige Bauteil 73 Ausnehmungen 74 auf, denen jeweils ein zapfenförmiger Vorsprung 41 der Lamellen 4 zugeordnet ist. Alternativ kann das separate flächige Bauteil 73 zapfenförmige Vorsprünge aufweisen, denen jeweils eine Ausnehmung der Lamellen 4 zugeordnet ist. Hierbei ist ebenfalls vorgesehen, dass die zapfenförmigen Vorsprünge jeweils gekröpft ausgestaltet sind.

Die Koppelstange 7 ist mit einem Bedienrad 6 betätigbar. An der Stirnfläche des Bedienrades 6 ist ein zapfenförmiger Vorsprung 61 ausgestaltet. Dieser zapfenförmige Vorsprung 61 verläuft in Richtung der Mittelachse des Bedienrades 6 und wird durch einen Durchbruch 12 in der Wand des Gehäuses 1 geführt. Im weiteren Verlauf weist der zapfenförmige Vorsprung 61 an seinem zum Bedienrad 6 gegenüberliegenden Endabschnitt einen rechtwinklig abstehenden Zapfen 62 auf. Dieser Zapfen 62 ist einer Kulissenbahn 75 zugeordnet, die in der Koppelstange 7 gewindegangartig verlaufend ausgestaltet ist. Somit wird eine Ausführung ähnlich einer Gewindespindel erreicht, mit der die Koppelstange 7 durch das Bedienrad 6 gesteuert werden kann.

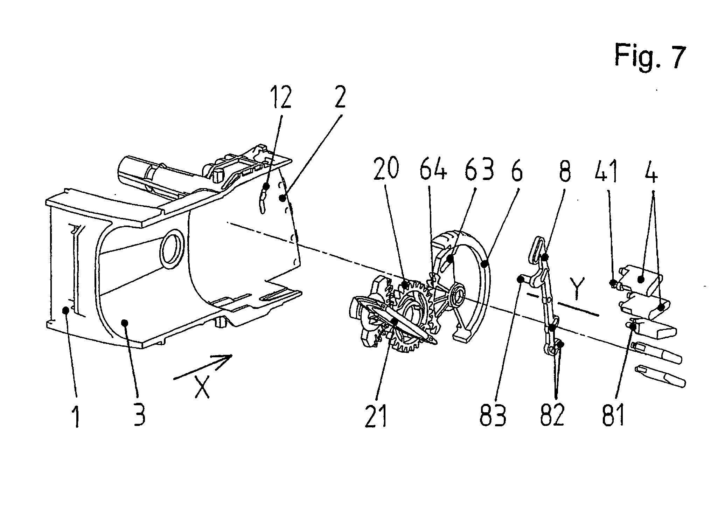

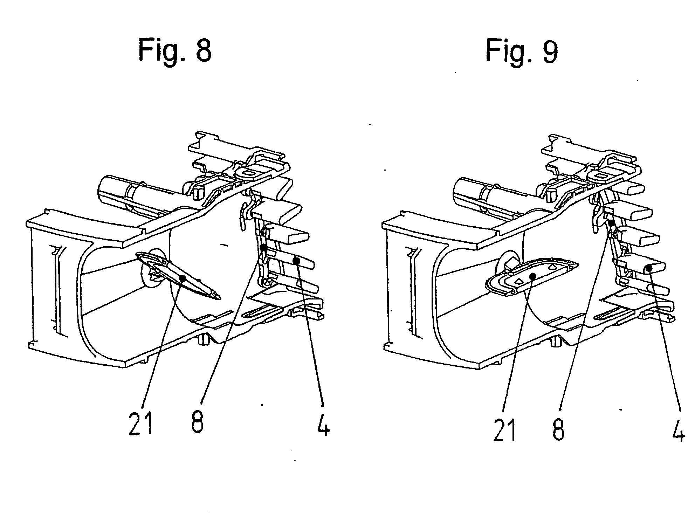

In der Ausführung gemäß Fig. 7 bis Fig. 9 ist das Koppelelement für die Lamellen 4 als eine Koppelplatte 8 ausgestaltet. Diese Koppelplatte 8 ist an einer Lamelle 4 abgestützt und um eine rechtwinklig zur Längsachse "X" der Luftdüse verlaufende Achse "Y" schwenkbar. Für eine selbsttätige Rückstellung beim Austritt aus der diffusen Stellung wird die Koppelplatte 8 von einer in Richtung ihrer Schwenkachse wirkenden Feder 81 beaufschlagt. Die Feder 81 ist an einer Lamelle 4 abgestützt.

Für eine optimale Auffächerung des Luftstroms ergeben sich Vorteile, sofern eine ungerade Anzahl von Lamellen 4 vorgesehen ist. Dabei ist die Koppelplatte 8 an der mittleren Lamelle 4 abgestützt. Gemäß der Zeichnung weist die Koppelplatte 8 Ausnehmungen 82 auf, denen jeweils ein zapfenförmiger Vorsprung 41 der Lamellen 4 zugeordnet ist. Alternativ kann die Koppelplatte 8 zapfenförmige Vorsprünge aufweisen, denen jeweils eine Ausnehmung der Lamellen 4 zugeordnet ist.

Die Koppelplatte 8 ist mit einem Bedienrad 6 betätigbar. Dabei ist an der Koppelplatte 8 an der zu den Lamellen 4 gegenüberliegenden Seite ein zapfenförmiger Vorsprung 83 ausgestaltet, der durch einen Durchbruch 12 in der Wand des Gehäuses 1 geführt ist. Diesem zapfenförmigen Vorsprung 83 ist eine Kulissenbahn 63 zugeordnet, welche in der Stirnfläche des Bedienrades 6 ausgestaltet ist. Diese Kulissenbahn 63, die eine Verlagerung der Lamellen 4 in eine aufgefächerte Position und somit für die Luftdüse eine diffuse Stellung bewirkt, kann speziell ausgestaltet werden, um für die Koppelplatte 8 eine selbsttätige Rückstellung beim Austritt aus der diffusen Stellung zu erreichen.

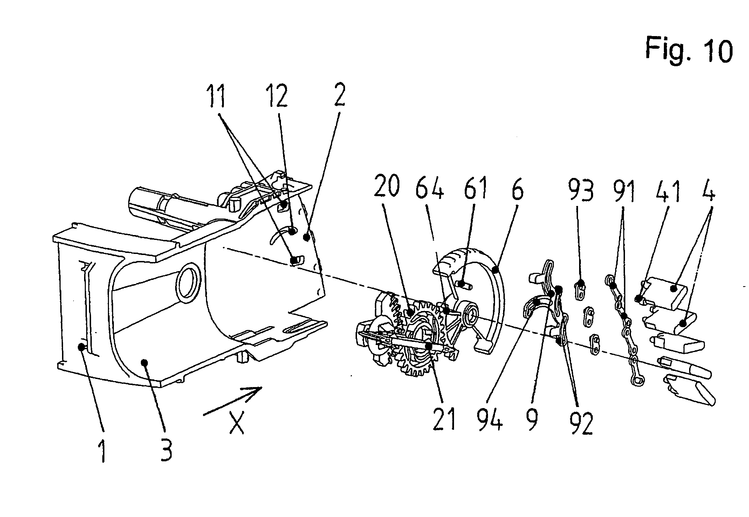

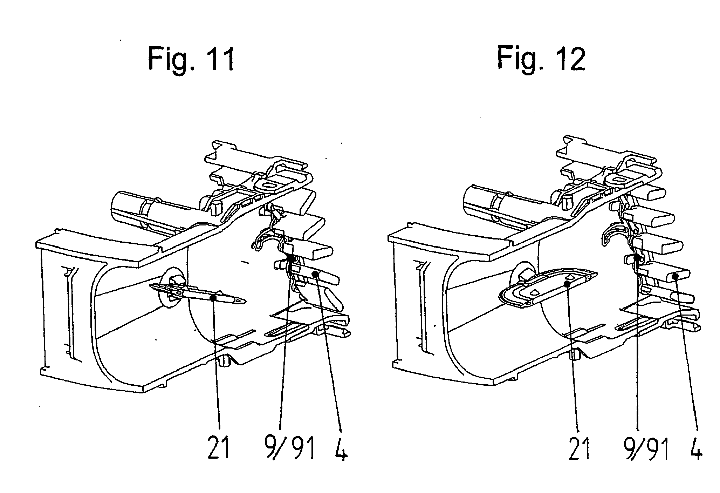

In der Ausführung gemäß Fig. 10 bis Fig. 12 ist das Koppelelement für die Lamellen 4 als eine Hubplatte 9 ausgestaltet. Die Hubplatte 9 ist in zwei Ausnehmungen 11 in der Wand des Gehäuses 1 abgestützt und in Richtung der Längsachse "X" der Luftdüse verlagerbar. Der Hubplatte 9 sind mehrere Koppelstangen 91 zugeordnet, die jeweils mit den Lamellen 4 in Wirkverbindung stehen. Weiterhin weist die Hubplatte 9 mehrere sichelförmige Ausnehmungen 92 auf.

In der Zeichnung ist eine Ausgestaltung dargestellt, bei der in den sichelförmigen Ausnehmungen 92 jeweils ein zapfenförmiger Vorsprung eines Verbindungsgliedes 93 geführt ist. Die Verbindungsglieder 93 weisen auf ihrer zur Hubplatte 9 gegenüberliegenden Stirnfläche jeweils einen weiteren zapfenförmigen Vorsprung auf, der in eine hierzu kongruente Öffnung einer Koppelstange 91 eingreift. Aus Gründen der Übersichtlichkeit ist in der Zeichnung auf eine Angabe von Bezugszeichen für die jeweiligen Vorsprünge und Ausnehmungen verzichtet worden, diese Ausgestaltungen sind jedoch insbesondere aus Fig. 10 zweifelsfrei ersichtlich.

Sofern in einer einfachen Ausführung auf die Verbindungsglieder 93 verzichtet werden soll, weist die Hubplatte 9 ebenfalls mehrere sichelförmige Ausnehmungen 92 auf, in denen dann jeweils unmittelbar ein zapfenförmiger Vorsprung einer Koppelstange 91 geführt wird.

Auch bei einer Ausführung gemäß Fig. 10 bis Fig. 12 können wie bei den vorherigen Ausführungen am Koppelelement (hier an den Koppelstangen 91) Ausnehmungen vorgesehen werden, denen jeweils ein zapfenförmiger Vorsprung 41 der Lamellen 4 zugeordnet ist. Alternativ können die Koppelstangen 91 zapfenförmige Vorsprünge aufweisen, denen jeweils eine Ausnehmung der Lamellen 4 zugeordnet ist.

Die Hubplatte 9 ist mit einem Bedienrad 6 betätigbar. An der Stirnfläche vom Bedienrad 6 ist ein zapfenförmiger Vorsprung 61 ausgestaltet. Der zapfenförmige Vorsprung 61 wird durch einen Durchbruch 12 in der Wand des Gehäuses 1 geführt und einer Kulissenführung 94 zugeordnet, die in der Hubplatte 9 ausgestaltet ist. Durch die Wirkverbindung des zapfenförmigen Vorsprungs 61 mit der Kulissenführung 94 wird eine Führung für die Hubplatte 9 realisiert, um diese zwischen den Lamellenpositionen für eine diffuse und für eine als "Spot" ausgeprägte Luftströmung bewegen zu können.

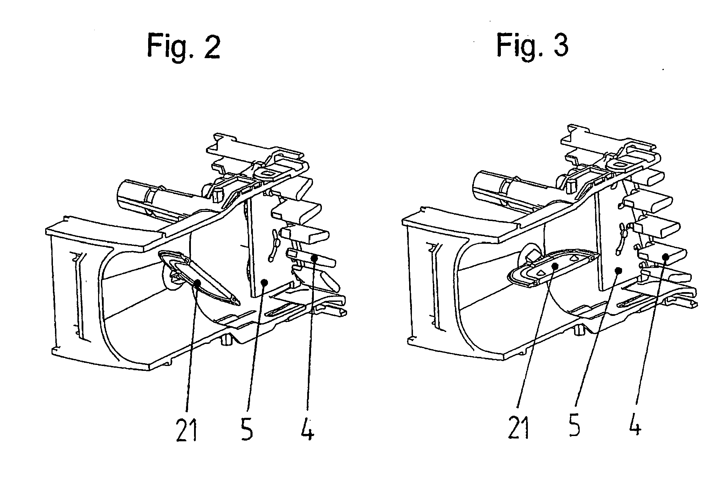

Unabhängig von der konkreten Ausgestaltung kann bei den beschriebenen Ausführungen die Position der Lamellen 4 mit dem Koppelelement - Kulissenplatte 5 / Koppelstange 7 / Koppelplatte 8 / Hubplatte 9 - verändert werden. Hierbei zeigen Fig. 3, Fig. 6, Fig. 9 und Fig. 12 eine konventionelle Anordnung mit zueinander parallel verlaufenden Lamellen 4. Hingegen zeigen Fig. 2, Fig. 5, Fig. 8 und Fig. 11 eine durch Anwendung der Erfindung mögliche Anordnung mit zueinander aufgefächerten Lamellen 4, die einen diffusen Luftstrom bewirken.

Sofern das Koppelelement für die Lamellen 4 mit einem Bedienrad 6 betätigt wird, kann das Bedienrad 6 einen Umfangsabschnitt mit einer zahnradförmigen Kontur 64 aufweisen. Diese Kontur 64 steht über weitere Bauteile 20 mit Zahnradkonturen mit einer Klappe 21 zur Steuerung des Strömungsquerschnittes innerhalb der Luftdüse in Wirkverbindung. Eine derartige Ausgestaltung ist aus Fig. 1, Fig. 4, Fig. 7 und Fig. 10 ersichtlich. Ebenso ist es möglich, dass das Bedienrad 6 über eine Koppelstange mit der Klappe 21 zur Steuerung des Strömungsquerschnittes innerhalb der Luftdüse in Wirkverbindung steht, wobei eine solche Ausgestaltung in der Zeichnung allerdings nicht näher dargestellt ist. Für beide Varianten ist es möglich, dass das Koppelelement mit der Klappe 21 derart in Wirkverbindung steht, dass die Klappe 21 bei diffuser Stellung der Lamellen 4 in eine Schließstellung verlagert wird.

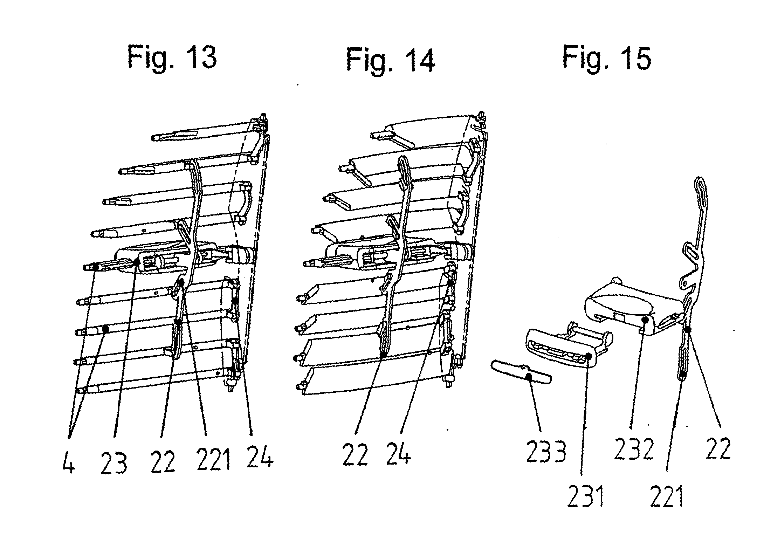

Während die bisherigen Darlegungen eine seitliche Anordnung des Betätigungselementes für das Koppelelement betreffen, können die hierfür notwendigen Bauteile auch innerhalb der Ausströmöffnung 2 in einer Luftdüse platziert werden. Diesbezügliche Ausgestaltungen sind aus Fig. 13 bis Fig. 21 ersichtlich, auf die nachfolgend Bezug genommen wird.

Fig. 13 bis Fig. 15 zeigen eine Konstruktion, bei der das Koppelelement für die Lamellen 4 ähnlich wie die Koppelplatte 8 in Fig. 7 ausgestaltet ist. Die hier gezeigte Koppelplatte 22 ist jedoch mit einem Bedienknopf 23 betätigbar. Dieser Bedienknopf 23 ist auf einer Lamelle 4 abgestützt und mehrteilig ausgestaltet. Dabei ist lediglich ein mit der Koppelplatte 22 verbundener Teilabschnitt 231 verlagerbar. Hingegen ist der andere Teilabschnitt 232 lagefixiert angeordnet.

Wie Fig. 15 zeigt, ist am lagefixierten Teilabschnitt 232 eine Führungsbahn ausgestaltet, in welcher der verlagerbare Teilabschnitt 231 mit einem hierzu kongruenten Konturabschnitt abstützbar ist. Gemäß dieser Darstellung kann der verlagerbare Teilabschnitt 231 gegenüber dem lagefixierten Teilabschnitt 232 beispielsweise in Form einer T-Führung geradlinig verlagert werden. Alternativ kann vorgesehen werden, dass die Teilabschnitte 231 und 232 des Bedienknopfes 23 zueinander kreisbogenförmig verlagerbar sind. Dann könnte eine umlaufende Führungshülse verwendet werden.

Diesbezüglich sind weitere Ausgestaltungen möglich. So könnte der Bedienungsknopf 23, der im gezeigten Ausführungsbeispiel per Hand gezogen wird, auch mit einer Push-Push-Funktion ausgestattet werden. Außerdem wäre es möglich, die Kappe um 90° zu drehen und das Koppelelement durch eine Art Getriebe (z.B. mittels Schnecke) anzusteuern. Der Bedienknopf 23 kann ferner mit einem Dekorelement 233 versehen werden.

Bei der Ausführung gemäß Fig. 13 und Fig. 14 sind jeweils zwei Lamellen 4 durch ein Verbindungsglied 24 miteinander gekoppelt. Von den gekoppelten Lamellen 4 wird jeweils nur eine Lamelle 4 in einer Kulissenführung 221 geführt, die in der Koppelplatte 22 ausgestaltet ist. Dadurch lassen sich die Zugkräfte des geteilten Bedienknopfes 23 minimieren und der Abstimmaufwand wird reduziert.

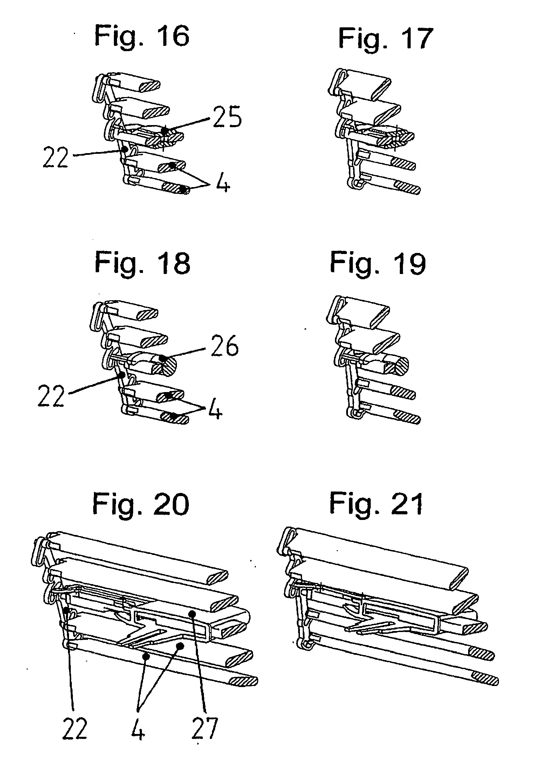

Fig. 16 bis Fig. 21 zeigen weitere Ausgestaltungen, bei denen das Koppelelement für die Lamellen 4 ähnlich wie die Koppelplatte 8 in Fig. 7 ausgestaltet ist.

Die hier gezeigten Koppelplatten 22 können gemäß Fig. 16 und Fig. 17 mit einem Bedienrad 25 betätigt werden. Dieses Bedienrad 25 kann in eine der Lamellen 4 integriert werden oder auch in einen Bedienknopf, der auf einer Lamelle 4 abgestützt ist.

Weiterhin können die Koppelplatten 22 gemäß Fig. 18 und Fig. 19 mit einer Walze 26 betätigt werden. Diese Walze 26 kann in eine der Lamellen 4 baulich integriert werden oder auch in einen Bedienknopf, der auf einer Lamelle 4 abgestützt ist.

Ferner können die Koppelplatten 22 gemäß Fig. 20 und Fig. 21 mit einem Hebelwerk 27 betätigt werden. Dieses Hebelwerk 27 ist mit einem Bedienknopf verlagerbar, der auf einer Lamelle 4 abgestützt ist und der z.B. nur in seiner seitlichen Maximalstellung mit dem Hebelwerk 27 in Wirkverbindung steht.

Unabhängig von der konkreten Ausgestaltung kann bei den Ausführungen gemäß Fig. 13 bis Fig. 21 die Position der Lamellen 4 mit der Koppelplatte 22 verändert werden. Hierbei zeigen Fig. 13, Fig. 16, Fig. 18 und Fig. 20 eine konventionelle Anordnung mit zueinander parallel verlaufenden Lamellen 4. Hingegen zeigen Fig. 14, Fig. 17, Fig. 19 und Fig. 21 eine durch Anwendung der Erfindung mögliche Anordnung mit zueinander aufgefächerten Lamellen 4, die einen diffusen Luftstrom bewirken.

Die beschriebene Erfindung ist unabhängig von der konkreten Einbaulage des Gehäuses einer Luftdüse im Fahrzeug anwendbar. Die Lamellen können somit in unterschiedlichen Richtungen orientiert werden, beispielsweise als Horizontal- oder Vertikallamellen. Die Koppelemente oder Lagerplatten, die oben- und untenseitig im Düsengehäuse angeordnet sind, sind mindestens in einer Achsrichtung verschiebbar gelagert und derart miteinander gekoppelt, dass sie parallel bewegt werden, um die gewünschte zusätzliche Bewegung der Lamellenanordnung zu der Verstellung der Einzellamellen zu bewirken.

### Bezugszeichenliste

- 1: Gehäuse
- 11: Ausnehmung
- 12: Durchbruch
- 13: Vorsprung

- 2: Luftausströmöffnung
- 3: Anschluss für Luftzuführung
- 4: Lamelle
- 41: zapfenförmiger Vorsprung

- 5: Kulissenplatte
- 51: zapfenförmiger Vorsprung
- 52: Ausnehmung
- 53: Kulissenführung

- 6: Bedienrad
- 61: zapfenförmiger Vorsprung
- 62: rechtwinklig abstehender Zapfen
- 63: Kulissenbahn
- 64: Zahnradkontur

- 7: Koppelstange
- 71: Ausnehmung
- 72: U-förmige Ausnehmung
- 73: flächiges Bauteil
- 74: Ausnehmung im flächigen Bauteil
- 75: gewindegangartige Kulissenbahn

- 8: Koppelplatte
- 81: Feder
- 82: Ausnehmung
- 83: zapfenförmiger Vorsprung

- 9: Hubplatte
- 91: Koppelstange
- 92: sichelförmige Ausnehmung
- 93: Verbindungsglied
- 94: Kulissenführung

- 20: Bauteil mit Zahnradkontur
- 21: Klappe
- 22: Koppelplatte
- 221: Kulissenführung

- 23: Bedienknopf
- 231: verlagerbarer Teilabschnitt
- 232: lagefixierter Teilabschnitt
- 233: Dekorelement

- 24: Verbindungsglied
- 25: Bedienrad
- 26: Walze
- 27: Hebelwerk

- X: Längsachse der Luftdüse
- Y: Schwenkachse der Koppelplatte

## Patentansprüche

1. Luftdüse zur Führung eines Luftstroms aus einem Luftzuführschacht oder einer Leitung in Heizungs-, Lüftungs- oder Klimaanlagen, insbesondere in Kraftfahrzeugen, bestehend aus einem Gehäuse, das in einen Wanddurchbruch einsetzbar ist und das eine vorderseitige Luftausströmöffnung und einen rückseitigen Anschluss für einen Luftzuführschacht oder eine Luftzuführleitung aufweist, wobei im Gehäuse mehrere Lamellen abgestützt sind, die durch ein Koppelelement miteinander verbunden und gleichartig verschwenkbar sind und die in Abhängigkeit ihrer jeweiligen Position unterschiedliche Arten von Ableitungen des Luftstroms bewirken, wobei das Koppelelement derart angeordnet und ausgestaltet ist, dass zusätzlich zu der eine gleichartige Schwenkbewegung der Lamellen bewirkenden Bewegung eine weitere Bewegung des Koppelelementes realisierbar ist, die eine Lageänderung der Lamellen in eine aufgefächerte Ausrichtung bewirkt, **dadurch gekennzeichnet, dass** das Koppelelement für die Lamellen (4) als eine Koppelstange (7) ausgestaltet ist, die mit einem Bedienrad (6) betätigbar ist, an dessen Stirnfläche ein zapfenförmiger Vorsprung (61) ausgestaltet ist, der durch einen Durchbruch (12) in der Wand des Gehäuses (1) geführt ist und der an seinem zum Bedienrad (6) gegenüberliegenden Endabschnitt einen rechtwinklig abstehenden Zapfen (62) aufweist, der einer gewindegangartig verlaufenden Kulissenbahn (75) der Koppelstange (7) zugeordnet ist.

2. Luftdüse nach Anspruch 1, **dadurch gekennzeichnet, dass** der zapfenförmige Vorsprung (61) in Richtung der Mittelachse des Bedienrades (6) verlaufend angeordnet ist.

3. Luftdüse zur Führung eines Luftstroms aus einem Luftzuführschacht oder einer Leitung in Heizungs-, Lüftungs- oder Klimaanlagen, insbesondere in Kraftfahrzeugen, bestehend aus einem Gehäuse, das in einen Wanddurchbruch einsetzbar ist und das eine vorderseitige Luftausströmöffnung und einen rückseitigen Anschluss für einen Luftzuführschacht oder eine Luftzuführleitung aufweist, wobei im Gehäuse mehrere Lamellen abgestützt sind, die durch ein Koppelelement miteinander verbunden und gleichartig verschwenkbar sind und die in Abhängigkeit ihrer jeweiligen Position unterschiedliche Arten von Ableitungen des Luftstroms bewirken, wobei das Koppelelement derart angeordnet und ausgestaltet ist, **dass** zusätzlich zu der eine gleichartige Schwenkbewegung der Lamellen bewirkenden Bewegung eine weitere Bewegung des Koppelelementes realisierbar ist, die eine Lageänderung der Lamellen in eine aufgefächerte Ausrichtung bewirkt, **dadurch gekennzeichnet, dass** das Koppelelement für die Lamellen (4) als eine Hubplatte (9) mit mehreren zugeordneten Koppelstangen (91) ausgestaltet ist, wobei die Hubplatte (9) in zwei Ausnehmungen (11) in der Wand des Gehäuses (1) abgestützt und in Richtung der Längsachse (X) der Luftdüse verlagerbar ist und wobei die Koppelstangen (91) jeweils mit den Lamellen (4) in Wirkverbindung stehen.

4. Luftdüse nach Anspruch 3, **dadurch gekennzeichnet, dass** die Hubplatte (9) mehrere sichelförmige Ausnehmungen (92) aufweist, in denen jeweils ein zapfenförmiger Vorsprung eines Verbindungsgliedes (93) geführt ist, wobei das Verbindungsglied (93) auf der zur Hubplatte (9) gegenüberliegenden Stirnfläche jeweils einen weiteren zapfenförmigen Vorsprung aufweist, der in eine hierzu kongruente Öffnung einer Koppelstange (91) eingreift.

5. Luftdüse nach Anspruch 3, **dadurch gekennzeichnet, dass** die Hubplatte (9) mehrere sichelförmige Ausnehmungen (92) aufweist, in denen jeweils ein zapfenförmiger Vorsprung einer Koppelstange (91) geführt ist.

6. Luftdüse nach Anspruch 3, **dadurch gekennzeichnet, dass** die Koppelstangen (91) Ausnehmungen aufweisen, denen jeweils ein zapfenförmiger Vorsprung der Lamellen (4) zugeordnet ist.

7. Luftdüse nach Anspruch 3, **dadurch gekennzeichnet, dass** die Koppelstangen (91) zapfenförmige Vorsprünge aufweisen, denen jeweils eine Ausnehmung der Lamellen (4) zugeordnet ist.

8. Luftdüse nach Anspruch 3, **dadurch gekennzeichnet, dass** die Hubplatte (9) mit einem Bedienrad (6) betätigbar ist, an dessen Stirnfläche ein zapfenförmiger Vorsprung (61) ausgestaltet ist, der durch einen Durchbruch (12) in der Wand des Gehäuses (1) geführt ist und der einer in der Hubplatte (9) ausgestalteten Kulissenführung (94) zugeordnet ist.

9. Luftdüse nach Anspruch 3, **dadurch gekennzeichnet, dass** das Koppelelement für die Lamellen (4) mit einem Bedienknopf (23) betätigbar ist, der auf einer Lamelle (4) abgestützt ist.

10. Luftdüse nach Anspruch 9, **dadurch gekennzeichnet, dass** der Bedienknopf (23) mehrteilig ausgestaltet ist, wobei lediglich ein mit dem Koppelelement verbundener Teilabschnitt (231) verlagerbar ausgestaltet ist, während der andere Teilabschnitt (232) lagefixiert angeordnet ist.

11. Luftdüse nach Anspruch 10, **dadurch gekennzeichnet, dass** am lagefixierten Teilabschnitt (232) des Bedienknopfes (23) eine Führungsbahn ausgestaltet ist, in welcher der verlagerbare Teilabschnitt (231) mit einem hierzu kongruenten Konturabschnitt abstützbar ist.

12. Luftdüse nach Anspruch 11, **dadurch gekennzeichnet, dass** der verlagerbare Teilabschnitt (231) des Bedienknopfes (23) gegenüber dem lagefixierten Teilabschnitt (232) geradlinig verlagerbar ist.

13. Luftdüse nach Anspruch 11, **dadurch gekennzeichnet, dass** der verlagerbare Teilabschnitt (231) des Bedienknopfes (23) gegenüber dem lagefixierten Teilabschnitt (232) kreisbogenförmig verlagerbar ist.

14. Luftdüse nach Anspruch 13, **dadurch gekennzeichnet, dass** jeweils zwei Lamellen (4) miteinander gekoppelt sind, von denen jeweils eine in einer Kulissenführung (221) des Koppelelementes geführt ist.

15. Luftdüse nach Anspruch 3, **dadurch gekennzeichnet,**
**dass** das Koppelelement für die Lamellen (4) mit einem Bedienrad (25) betätigbar ist, das baulich in eine der Lamellen (4) integriert ist.

16. Luftdüse nach Anspruch 3, **dadurch gekennzeichnet, dass** das Koppelelement für die Lamellen (4) mit einem Bedienrad (25) betätigbar ist, das baulich in einen Bedienknopf integriert ist, der auf einer Lamelle (4) abgestützt ist.

17. Luftdüse nach Anspruch 3, **dadurch gekennzeichnet, dass** das Koppelelement für die Lamellen (4) mit einer Walze (26) betätigbar ist, die baulich in eine der Lamellen (4) integriert ist.

18. Luftdüse nach Anspruch 3, **dadurch gekennzeichnet, dass** das Koppelelement für die Lamellen (4) mit einer Walze (26) betätigbar ist, die baulich in einen Bedienknopf integriert ist, der auf einer Lamelle (4) abgestützt ist.

19. Luftdüse nach Anspruch 3, **dadurch gekennzeichnet, dass** das Koppelelement für die Lamellen (4) mit einem Hebelwerk (27) betätigbar ist, das mit einem Bedienknopf verlagerbar ist, der auf einer Lamelle (4) abgestützt ist.

20. Luftdüse nach Anspruch 19, **dadurch gekennzeichnet, dass** der Bedienknopf lediglich in seiner seitlichen Maximalstellung mit dem Hebelwerk (27) in Wirkverbindung steht.

## Claims

1. Air nozzle for guidance of an air flow from an air feed shaft or a duct in heating, ventilating or air-conditioning installations, particularly in motor vehicles consisting of a housing, which is insertable into a wall passage and which has an air outflow opening at the front side and a connection at the rear side for an air feed shaft or an air feed duct, wherein several plates, which are connected together by a coupling element and pivotable in like manner and which depending on their respective position effect different forms of discharges of the air flow, are supported in the housing, wherein the coupling is arranged and designed in such a manner that in addition to the movement effecting a like pivot movement of the plates a further movement of the coupling element can be realised which effects a positional change of the plates in a fanned orientation, **characterised in that** the coupling element for the plates (4) is formed as a coupling rod (7) actuable by a control wheel (6), at the front face of which a pin-shaped projection (61) is formed, which is led through a passage (12) in the wall of the housing (1) and which has at its end section opposite the control wheel (6) a right-angularly protruding pin (62) which is associated with a gate track (75), which extends in threadlike manner, of the coupling rod (7).

2. Air nozzle according to claim 1, **characterised in that** the pin-shaped projection (61) is arranged to extend in the direction of the centre axis of the control wheel (6).

3. Air nozzle for guidance of an air flow from an air feed shaft or a duct in heating, ventilating or air-conditioning installations, particularly in motor vehicles consisting of a housing, which is insertable into a wall passage and which has an air outflow opening at the front side and a connection at the rear side for an air feed shaft or an air feed duct, wherein several plates, which are connected together by a coupling element and pivotable in like manner and which depending on their respective position effect different forms of discharges of the air flow, are supported in the housing, wherein the coupling is arranged and designed in such a manner that in addition to the movement effecting a like pivot movement of the plates a further movement of the coupling element can be realised which effects a positional change of the plates in a fanned orientation, **characterised in that** the coupling element for the plates (4) is formed as a stroke plate (9) with several associated coupling rods (91), wherein the stroke plate (9) is supported in two recesses (11) in the wall of the housing (1) and is displaceable in the direction of the longitudinal axis (X) of the air nozzle and wherein the coupling rods (91) are respectively disposed in operative connection with the plates (4).

4. Air nozzle according to claim 3, **characterised in that** the stroke plate (9) has several crescent-shaped recesses (92) in each of which a respective pin-shaped projection of a connecting element (93) is guided, wherein the connecting element (93) has on the end face, which is opposite the stroke plate (9), a respective further pin-shaped projection which engages in an opening, which is congruent with respect thereto, of a coupling rod (91).

5. Air nozzle according to claim 3, **characterised in that** the stroke plate (9) has several crescent-shaped recesses (92), in each of which a respective pin-shaped projection of a coupling rod (91) is guided.

6. Air nozzle according to claim 3, **characterised in that** the coupling rods (91) have recesses which are each associated with a respective pin-shaped projection of the plates (4).

7. Air nozzle according to claim 3, **characterised in that** the coupling rods (19) have pin-shaped projections which are each associated with a respective recess of the plates (4).

8. Air nozzle according to claim 3, **characterised in** the stroke plate (9) is actuable by control wheel (6), at the end face of which is formed a pin-shaped projection (61) which is led through a passage (12) in the wall of the housing (1) and which is associated with a gate guide (94) formed in the stroke plate (9).

9. Air nozzle according to claim 3, **characterised in that** the coupling element for the plates (4) is actuable by a control button (23) supported on a plate (4).

10. Air nozzle according to claim 9, **characterised in that** the control button (23) is of multi-part construction, wherein merely a part section (231) connected with the coupling element is formed to be displaceable, whilst the other part section (232) is arranged to be positionally fixed.

11. Air nozzle according to claim 10, **characterised in that** a guide track in which the displaceable part section (231) can be supported by a profile section congruent therewith is formed at the positionally fixed part section (232) of the control button (23).

12. Air nozzle according to claim 11, **characterised in that** the displaceable part section (231) of the control button (23) is rectilinearly displaceable relative to the positionally fixed part section (232).

13. Air nozzle according to claim 11, **characterised in that** the displaceable part section (231) of the control button (23) is arcuately displaceable relative to the positionally fixed part section (232).

14. Air nozzle according to claim 13, **characterised in that** in each instance two plates (4) are coupled together, of which each time one is guided in a gate guide (221) of the coupling element.

15. Air nozzle according to claim 3, **characterised in that** the coupling element for the plates (4) is actuable by a control wheel (25) constructionally integrated in one of the plates (4).

16. Air nozzle according to claim 3, **characterised in that** the coupling element for the plates (4) is actuable by a control wheel (25) constructionally integrated in a control button supported on a plate (4).

17. Air nozzle according to claim 3, **characterised in that** the coupling element for the plates (4) is actuable by a roller (26) constructionally integrated in one of the plates (4).

18. Air nozzle according to claim 3, **characterised in that** the coupling element for the plates (4) is actuable by a roller (26) constructionally integrated in a control button supported on a plate (4).

19. Air nozzle according to claim 3, **characterised in that** the coupling element for the plates (4) is actuable by a lever mechanism (27) displaceable by a control button supported on a plate (4).

20. Air nozzle according to claim 19, **characterised in that** the control button is disposed in operative connection with the lever mechanism (27) merely in the lateral maximum setting of the button.

## Revendications

1. Buse d'aération servant à guider un courant d'air depuis une gaine d'entrée d'air ou une conduite dans des installations de chauffage, d'aération ou de climatisation, notamment dans des véhicules automobiles, se composant d'un boîtier qui peut être inséré dans un perçage de paroi et qui présente un orifice de sortie d'air sur le devant et un raccord sur le derrière pour une gaine d'entrée d'air ou une conduite d'amenée d'air, plusieurs lamelles étant en appui dans le boîtier, lesquelles sont reliées par un élément de couplage et peuvent être pivotées de manière similaire et qui provoquent en fonction de leurs positions respectives différents types de dérivations du courant d'air, l'élément de couplage étant disposé et conçu de telle façon qu'outre le mouvement provoquant un mouvement de pivotement similaire des lamelles, un autre mouvement de l'élément de couplage puisse être réalisé, lequel provoque une modification de la position des lamelles dans une orientation en éventail, **caractérisée en ce que** l'élément de couplage pour les lamelles (4) est réalisé comme une barre d'accouplement (7) qui peut être actionnée à l'aide d'une molette de commande (6), sur la face frontale de laquelle est réalisée une saillie (61) en forme de tenon qui est guidée au travers d'un perçage (12) dans la paroi du boîtier (1) et qui présente sur sa section finale opposée à la molette de commande (6) un tenon (62) dépassant perpendiculairement, s'étendant comme un pas de vis, qui est associé à une coulisse (75) de la barre d'accouplement (7).

2. Buse d'aération selon la revendication 1, **caractérisée en ce que** la saillie (61) en forme de tenon est disposée de manière à s'étendre en direction de l'axe médian de la molette de commande (6).

3. Buse d'aération servant à guider un courant d'air depuis une gaine d'entrée d'air ou une conduite dans des installations de chauffage, d'aération ou de climatisation, notamment dans des véhicules automobiles, se composant d'un boîtier qui peut être inséré dans un perçage de paroi et qui présente un orifice de sortie d'air sur le devant et un raccord sur le derrière pour une gaine d'entrée d'air ou une conduite d'amenée d'air, plusieurs lamelles étant en appui dans le boîtier, lesquelles sont reliées par un élément de couplage et peuvent être pivotées de manière similaire et qui provoquent en fonction de leurs positions respectives différents types de dérivations du courant d'air, l'élément de couplage étant disposé et conçu de telle façon qu'outre le mouvement provoquant un mouvement de pivotement similaire des lamelles, un autre mouvement de l'élément de couplage puisse être réalisé, lequel provoque une modification de la position des lamelles dans une orientation en éventail, **caractérisée en ce que** l'élément de couplage pour les lamelles (4) est réalisé comme une plaque de levage (9) avec plusieurs barres d'accouplement (91) associées, la plaque de levage (9) étant en appui dans deux évidements (11) dans la paroi du boîtier (1) et pouvant être décalée en direction de l'axe longitudinal (X) de la buse d'aération et les barres d'accouplement (91) étant en liaison effective respectivement avec les lamelles (4).

4. Buse d'aération selon la revendication 3, **caractérisée en ce que** la plaque de levage (9) présente plusieurs évidements (92) falciformes, dans lesquels une saillie en forme de tenon d'un élément de liaison (93) est respectivement guidée, l'élément de liaison (93) présentant sur la face frontale opposée à la plaque de levage (9) respectivement une autre saillie en forme de tenon qui s'engage dans un orifice congruent à cet effet d'une barre d'accouplement (91).

5. Buse d'aération selon la revendication 3, **caractérisée en ce que** la plaque de levage (9) présente plusieurs évidements (92) falciformes, dans lesquels une saillie en forme de tenon d'une barre d'accouplement (91) est respectivement guidée.

6. Buse d'aération selon la revendication 3, **caractérisée en ce que** les barres d'accouplement (91) présentent des évidements, auxquels est associée respectivement une saillie en forme de tenon des lamelles (4).

7. Buse d'aération selon la revendication 3, **caractérisée en ce que** les barres d'accouplement (91) présentent des saillies en forme de tenon, auxquelles est associé respectivement un évidement des lamelles (4).

8. Buse d'aération selon la revendication 3, **caractérisée en ce que** la plaque de levage (9) peut être actionnée à l'aide d'une molette de commande (6), sur la face frontale de laquelle est réalisée une saillie en forme de tenon (61) qui est guidée au travers d'un perçage (12) dans la paroi du boîtier (1) et qui est associée à un guidage coulissant (94) réalisé dans la plaque de levage (9).

9. Buse d'aération selon la revendication 3, **caractérisée en ce que** l'élément de couplage pour les lamelles (4) peut être actionné à l'aide d'un bouton de commande (23) qui est en appui sur une lamelle (4).

10. Buse d'aération selon la revendication 9, **caractérisée en ce que** le bouton de commande (23) est réalisé en plusieurs parties, une section partielle (231) reliée à l'élément de couplage étant réalisée uniquement de manière à pouvoir être décalée, alors que l'autre section partielle (232) est disposée en position fixe.

11. Buse d'aération selon la revendication 10, **caractérisée en ce que** sur la section partielle (232) en position fixe du bouton de commande (23) est réalisé un guidage, dans lequel la section partielle (231) pouvant être décalée peut être en appui avec une section de contour congruente à cet effet.

12. Buse d'aération selon la revendication 11, **caractérisée en ce que** la section partielle (231) pouvant être décalée du bouton de commande (23) peut être décalée en ligne droite par rapport à la section partielle (232) en position fixe.

13. Buse d'aération selon la revendication 11, **caractérisée en ce que** la section partielle (231) pouvant être décalée du bouton de commande (23) peut être décalée en forme d'arc de cercle par rapport à la section partielle (232) en position fixe.

14. Buse d'aération selon la revendication 13, **caractérisée en ce que** deux lamelles (4) sont couplées respectivement, parmi lesquelles l'une est guidée respectivement dans un guidage coulisse (221) de l'élément de couplage.

15. Buse d'aération selon la revendication 3, **caractérisée en ce que** l'élément de couplage pour les lamelles (4) peut être actionné à l'aide d'une molette de commande (25) qui est intégrée par construction dans l'une des lamelles (4).

16. Buse d'aération selon la revendication 3, **caractérisée en ce que** l'élément de couplage pour les lamelles (4) peut être actionné à l'aide d'une molette de commande (25) qui est intégrée par construction dans un bouton de commande qui est en appui sur une lamelle (4).

17. Buse d'aération selon la revendication 3, **caractérisée en ce que** l'élément de couplage pour les lamelles (4) peut être actionné à l'aide d'un rouleau (26) qui est intégré par construction dans l'une des lamelles (4).

18. Buse d'aération selon la revendication 3, **caractérisée en ce que** l'élément de couplage pour les lamelles (4) peut être actionné à l'aide d'un rouleau (26) qui est intégré par construction dans un bouton de commande qui est en appui sur une lamelle (4).

19. Buse d'aération selon la revendication 3, **caractérisée en ce que** l'élément de couplage pour les lamelles (4) peut être actionné à l'aide d'un appareil à levier (27) qui peut être décalé avec un bouton de commande qui est en appui sur une lamelle (4).

20. Buse d'aération selon la revendication 19, **caractérisée en ce que** le bouton de commande est en liaison effective uniquement dans sa position maximale latérale avec l'appareil à levier (27).
